# EUROPEAN PATENT APPLICATION

(11) **EP 1 527 692 A1**
(43) Date of publication of application: **04.05.2005**
(21) Application number: 04256464.1
(22) Date of filing: 20.10.2004
(51) Int. Cl.: A23C 20/02, A23C 11/10

(54) **Method of preparation of high quality soy-containing cheese products**

(30) Priority: 29.10.2003 US 696636
(71) Applicant: Kraft Foods Holdings, Inc., Northfield, Illinois 60093 (US)
(72) Inventor: Akashe, Ahmad, Mundelein, Illinois 60060 (US); Meibach, Ronald Louis, Deerfield, Illinois 60015 (US)
(74) Representative: Smaggasgale, Gillian Helen

(57) **Abstract**

Soy-containing cheese products as well as methods for producing such products, are provided. The soy-containing cheese products are prepared using deflavored soy protein material.
The soy milk is deflavored by solubilising the soy proteins by adjusting the pH in the range of 9 to 12, ultrafiltering the pH adjusted milk under conditions wherein the flavor compounds pass through the membrane and recovering the solubilized soy proteins retained by the ultrafiltration membrane.

## Description

### BACKGROUND OF THE INVENTION

This invention relates generally to the processing of soy-derived materials for use in various food products, especially cheese products. More particularly, the invention relates to a method of deflavoring soy materials in order to make them acceptable in a wide range of foods, including cheese products.

In recent years, soy proteins have become widely used in food products, for the health benefits to be obtained from their use. In some applications, the taste of the soy materials is not objectionable. However, in some uses, such as dairy analog products, beverages and the like, the flavors found in soy materials may prevent their ready acceptance by the consumer. Thus, in order to extend the uses of soy materials, the present inventors wanted to find a method of reducing the flavor components of soy materials. However, it was not evident that methods which had been used previously to remove flavor components from other organic materials would be successful in the treating of soy materials. Organic materials, since they have complex compositions, must be tested to determine whether any given method of treating them will be satisfactory.

One example of previously employed methods to purify organic materials is found in U.S. Patent 4,477,480, in which the patentees show that starch can be treated with an alkali to remove objectionable flavor components. In a commonly assigned patent, U.S. Patent 4,761,186, ultrafiltration is used to purify starch. In both cases, flavor components are removed from the starch, in the '480 patent by solubilizing the flavor components so that they can be washed out of the relatively insoluble starch. In the '186 patent, ultrafiltration was used to remove the flavor components as permeate, while the insoluble starch remained in an aqueous slurry. By contrast, the present invention separates flavor components from soluble high molecular weight soy proteins.

There are many articles and patents which relate to processing soy materials in order to recover the protein content and which at the same time reduce the flavor compounds to make the proteins more acceptable in food products. However, these previous disclosures were not specifically directed to removal of flavoring compounds and recovering as much of the protein as possible. One example is U.S. Patent 4,420,425 in which protein components of soy are solubilized at a pH of 7 to 11, preferably about 8 and, after ultrafiltration through a membrane having a molecular weight cut off above 70,000, are recovered by spray drying the retained soy proteins. In variants, only a portion of the protein is solubilized at lower pH values and subjected to ultrafiltration with a membrane having a cutoff preferably above 100,000 molecular weight, the product was found to have improved color and flavor. A higher cutoff valve would be expected to result in a loss of valuable proteins. In another patent, U.S. Patent 5,658,714, a soy flour slurry is pH-adjusted to the range of 7 to 10 to solubilize proteins, which are then passed through an ultrafiltration membrane and phytate and aluminum are retained, presumably as solids. While the molecular weight cutoff of the membrane was not given, it is assumed that the pore size was large in order to be able to pass the soluble proteins. Both of these patents contain extensive discussions of the efforts of others in the processing of soy materials; neither teaches or suggests the control of pH during the ultrafiltration process.

In a group of related patents, Mead Johnson Company disclosed processes for solubilizing soy proteins by raising the pH of an aqueous solution of soy materials and recovering the proteins which are said to have a bland taste. The processes are principally directed to concentrating proteins rather than removing flavor compounds. In U.S. Patent 3,995,071, the pH was increased to 10.1 to 14 (preferably 11 to 12) to solubilize soy proteins, after which the pH was lowered to about 6 to 10 and ultrafiltration with a membrane having a molecular weight cutoff of 10,000 to 50,000 Daltons was used to retain the proteins while discarding carbohydrates and minerals. In U.S. Patent 4,072,670, emphasis was placed on removing phytates and phytic acid by solubilizing proteins at a pH of 10.6 to 14 and a temperature of 10 to 50°C to make the phytates and phytic acid insoluble, then separating them and finally acidifying the solution to a pH of about 4 to 5 to precipitate the soy proteins. In U.S. Patent 4,091,120 soy proteins were solubilized at a pH less than 10, preferably 7 to 9 and ultrafiltration was used to separate the proteins as retentate, while passing carbohydrates as permeate. These patents do not teach or suggest control of the pH during the ultrafiltration process.

The present inventors wanted to remove compounds in soy materials which contribute color and flavor and which interfere with the use of soy in certain food products such as beverages, dairy analogs, and the like. They have found that soy-derived materials can be treated successfully using the process to be described below, recovering substantially all of the proteins and rejecting the compounds which cause undesirable color and flavor. Moreover, by controlling the pH within the range of about 9 to about 12 during the ultrafiltration process, deflavored soy materials having improved functional properties can be obtained. Thus, the product is suitable for many food products.

### SUMMARY OF THE INVENTION

The present invention provides soy-containing cheese products prepared using deflavored soy protein. Broadly, the deflavored soy protein is prepared using a process wherein an aqueous soy composition is prepared having a soy concentration of about 1 to about 20 percent, which composition is then pH-adjusted to solubilize the protein content and to release the flavoring compounds. Then the composition is subjected to ultrafiltration, while maintaining pH control, using a membrane capable of retaining substantially all of the protein content of the soy while removing flavoring components as permeate.

The deflavored soy materials prepared by the present methods are ideally suited for use in dairy and non-dairy beverages, smoothies, health drinks, confectionary type products, nutritional bars, cheese products, dairy and non-dairy yogurts, meat and meat analog products, cereals, baked products, snacks, and the like. For purposes of this invention, cheese products include, for example, natural cheeses, process cheeses, cheese analogs, imitation cheeses, and the like.

In one embodiment, the present invention provides a soy-containing cheese product comprising a deflavored soy protein material, wherein the deflavored soy protein material is prepared by a method comprising:
(a) obtaining a soy protein composition containing soluble soy proteins, flavoring compounds, and insoluble materials;
(b) solubilizing the soy proteins by adjusting the soy protein composition of (a) to a pH in the range of about 9 to about 12 and releasing the flavoring compounds;
(c) passing the pH-adjusted soy protein composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy protein composition and retaining substantially all of the solubilized soy proteins; and
(d) recovering the solubilized soy proteins retained by the ultrafiltration membrane, wherein the recovered solubilized soy proteins is the deflavored soy protein material.

In another embodiment, the present invention provides a method of preparing a soy-containing cheese product, said method comprising
mixing a deflavored soy protein material and a cheese base composition to form the soy-containing cheese product;
wherein the deflavored soy protein material is prepared by a method comprising:
(a) obtaining a soy protein composition containing soluble soy proteins, flavoring compounds, and insoluble materials;
(b) solubilizing the soy proteins by adjusting the soy protein composition of (a) to a pH in the range of about 9 to about 12 and releasing the flavoring compounds;
(c) passing the pH-adjusted soy protein composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy protein composition and retaining substantially all of the solubilized soy proteins; and
(d) recovering the solubilized soy proteins retained by the ultrafiltration membrane, wherein the recovered solubilized soy proteins is the deflavored soy protein material.

In one aspect, the invention is a method of deflavoring soy-derived materials such as soy milk, soy flour, soy concentrates, and soy protein isolates, which method includes preparing an aqueous composition of the soy material containing flavoring compounds, adjusting the pH to the range of about 9 to 12 to solubilize the protein content of the soy material and release the flavor components, and then passing the pH-adjusted composition adjacent to an ultrafiltration membrane having pores which provide a molecular weight cutoff up to 50,000 Daltons while maintaining the pH in the range of about 9 to about 12, thus retaining substantially all of the protein content, while passing through the pores the flavor producing compounds.

In another aspect, the invention includes adjusting the pH to the range of about 9 to 12 with an alkali such as sodium, potassium or calcium hydroxides to solubilize the protein content and releasing the flavor compounds, making it possible to separate such compounds by ultrafiltration. Importantly, the pH is also controlled within the range of about 9 to about 12 during the ultrafiltration process.

In one embodiment, the invention is a method for deflavoring soy materials in a continuous process wherein a pH-adjusted aqueous mixture of soy materials is passed adjacent an ultrafiltration membrane to separate the flavor components. The pH is maintained at about 9 to about 12 during the ultrafiltration by the addition of the appropriate amount of an appropriate pH-altering material (generally a base). The permeate containing flavor components and water is passed adjacent a reverse osmosis membrane to dewater the permeate and the separated water is recycled to join recycled retentate and fresh pH-adjusted soy materials. A portion of the retentate is continually removed and the deflavored soy materials recovered.

In a preferred embodiment, the invention is a method for deflavoring soy materials in a batch or semi-continuous process wherein a pH-adjusted aqueous mixture of soy materials is passed adjacent an ultrafiltration membrane, the permeate is separated for recovery of the flavor components, and the retentate is recycled to join fresh pH-adjusted soy materials. Water is added periodically or continuously to replace the water lost to the permeate and to adjust the concentration of soy materials in the combined stream to a predetermined level. If necessary, a pH-altering material (e.g., a base) can be added to the recycled retentate or added water to control the pH to the desired range during the ultrafiltration process. The process is continued until all of the flavoring compounds have been removed.

In another preferred embodiment, the present invention provides a method for preparing deflavored soy protein material, said method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of about 9 to about 12 and releasing the flavoring compounds;
(c) removing the insoluble materials from the pH-adjusted aqueous composition of (b) to obtain a treated aqueous composition;
(d) passing the treated aqueous composition of (c) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and
(e) recovering the solubilized soy proteins retained by the ultrafiltration membrane to obtain the deflavored soy protein material.

The ultrafiltration membrane used in the method of the invention will have a molecular weight cutoff up to 50,000 Daltons, preferably 1,000 to 50,000, most preferably about 10,000 and preferably is a polyethersulfone or ceramic membrane.

### BRIEF DESCRIPTION OF THE DRAWING

FIG. 1 is a graph of the intensity of soy flavor attributes.
FIG. 2 is a graph of the intensity of deflavored soy milk compared to a control sample.
FIG. 3 is a graph of the intensity of another group of soy flavor attributes.
FIG. 4 is a graph of the intensity of deflavored soy concentrate and a control sample compared to the sample of FIG. 3.
FIG. 5 is a graph of the intensity of deflavored soy concentrate and a control sample.
FIG. 6 is a graph showing the change in concentration of flavor compounds between a deflavored soy sample and a control sample.
FIG. 7 is a graph showing the change in concentration of flavor compounds between a deflavored soy sample and a control sample.
FIG. 8 is a block diagram of one process employing the invention.

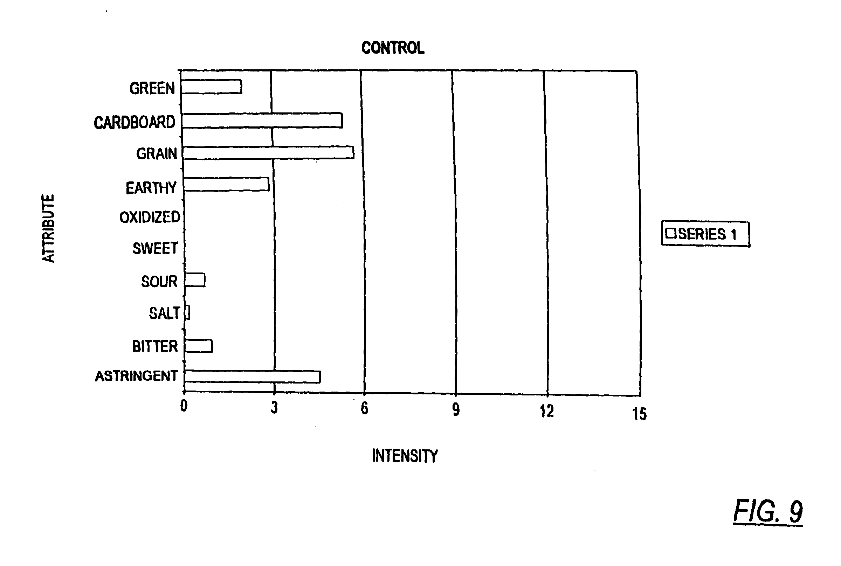

FIG. 9 is a graph of the intensity of soy isolate flavor attributes.

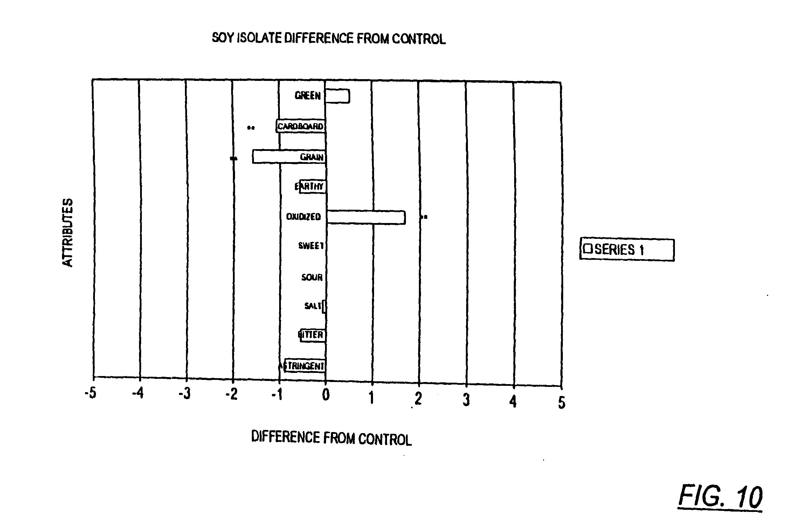

FIG. 10 is a graph of the intensity of deflavored soy isolate compared to a control sample.
FIG. 11 is a block diagram of a preferred embodiment for preparing the deflavored soy protein material.

### DESCRIPTION OF THE PREFERRED EMBODIMENTS

**Soy-Derived Materials.** Soybeans are valuable sources of oil and, in the present invention, of proteins. Soy beans contain about 40 percent proteins, which have been classified after ultracentrifugation as 2S, 7S, 11S and 15S (see also U.S. Patent 4,420,425). These fractions may contain other materials as well and they have a wide molecular-weight range, from 3,000 to 600,000. It is well known that soy products have undesirable odors and flavors which should be removed in order to make the soy materials widely useful in food products. It is believed that lipoxygenases catalyze the oxidation of certain polyunsaturated fatty acids, producing hydroperoxides which are degraded into volatile carbonyl compounds, associated with objectionable odors and flavors in soy-derived materials. Some of the compounds associated with soy flavors are described in Table C in Example 10 below.

While the protein content of soy-derived materials is considered a valuable fraction for use in food products, soluble carbohydrates are considered undesirable. Their removal from soy protein fractions is an objective in many processes in which the proteins are recovered.

Phytates are compounds which also are considered undesirable in soy proteins. These compounds are calcium-magnesium-potassium salts of inositol hexaphosphoric acid. Such compounds are believed to chelate metal ions and are not readily absorbed by the human body. They are considered to bind to soy proteins and interfere with digestion. As mentioned above, removal of phytates has been an objective of workers in the field of soy-derived materials.

**Ultrafiltration Membranes.** Filtration is used to separate many materials. In the present invention, ultrafiltration is used to remove flavoring compounds from soy-derived materials. Importantly, the pH of the soy-derived material should be maintained in the range of about 9 to about 12 during the ultrafiltration process. Ultrafiltration is intended to remove particles having a size between 10 to 1,000 Angstroms (0.001 to 0.1 microns), corresponding generally to particles having a molecular weight between 10,000 and 1,000,000, and which may also be affected by the shape of such high molecular weight particles. Soy proteins have molecular range between about 3,000 and 600,000. A membrane may be chosen which is capable of passing all of the soy proteins or only a selected portion. In the present invention, the soy proteins are retained by the ultra filtration membrane under the selected operating conditions, while the lower molecular weight flavoring compounds pass through the membrane and are separated, thus improving the color and flavor of the retained soy proteins and associated solids.

A polymer ultrafiltration membrane may be defined as an anisotropic (non-uniform) layer. One face is a skin containing pores which determine the size of molecules which can pass through the membrane. Supporting the surface skin is a spongy structure which extends to the opposite face. Such membranes are commonly made by coagulation of polymers in an aqueous bath. Typical polymers which are used include polysulfones, cellulose esters, poly(vinyldenefluoride), poly (dimethylphenylene oxide), poly (acrylonitrile), which can be cast into membranes. Often, the membranes are formed into hollow tubes which are assembled into bundles, through which the solution to be filtered is passed. Alternatively, flat membrane sheets and spiral designs may be used. In commercial practice, pressure is applied to facilitate movement of the lower molecular weight compounds through the membrane. The membrane must be able to withstand the pressures used, making it important that the spongy supporting structure be uniform to avoid breaking the surface skin and bypassing the membrane.

In addition to the polymeric membranes just described, other materials have been used to make ultrafiltration membranes, such as ceramics, sintered metals, and other inorganic materials. The present invention is not limited to any particular type of membrane. In general, the membrane must be able to pass the flavoring compounds, which are believed to have molecular weights lower than 1,000 Dalton. More importantly, the membranes must be able to retain substantially all of the solubilized soy proteins. Thus, the membrane of the invention will have a molecular weight cutoff up to about 50,000 Daltons, preferably about 1,000 to 50,000, more preferably 10,000 to 30,000.

**Process.** The process of the invention includes the following steps:
(1) Prepare an aqueous mixture of the soy-derived material;
(2) Add a base to raise the pH of the aqueous mixture to about 9 to about 12 in order to solubilize the soy proteins and to release the flavoring compounds;
(3) Pass the pH-adjusted mixture, while maintaining the pH in the range of about 9 to about 12, adjacent to an ultrafiltration membrane having a molecular weight cutoff up to about 50,000, remove the flavoring compounds as permeate, and remove the remaining soy proteins and other soy materials as retentate; and
(4) Neutralize the retentate and recover the soy proteins.

All types of soy materials are considered to be potential sources of soy for use in food products. Thus, soy materials which contain proteins are combined into an aqueous mixture, generally a slurry of soy solids. The protein content is needed for food products, but as discussed above, it is believed to contain flavoring compounds which must be released in order that they can be separated. The separation of flavoring compounds is carried out in an aqueous mixture in which both the proteins and flavoring compounds are dissolved. The concentration of the soy materials in the aqueous mixture will be in the range of about 1 to about 20 percent. Generally, the concentration of soy materials after pH adjustment will change during the subsequent ultrafiltration step as water is removed with the permeate. The water will be replaced either periodically or continuously. For example, in diafiltration water is added to gradually dilute the retained proteins in a batch or semi-continuous process.

The second step, as will be seen in the examples, is important if removal of the flavoring compounds is to be accomplished. The soy proteins are solubilized by adding a base to the aqueous mixture to achieve a pH of about 9 to 12. In general, it has been found that a pH of 9 is needed to solubilize all of the proteins, while a pH higher than 12 is likely to cause undesirable degradation of the proteins. While in theory, any base might be used, sodium or potassium hydroxide are preferred, particularly potassium hydroxide. Other bases which may have application include calcium, magnesium and ammonium hydroxides. It is believed that solubilizing the soy proteins changes their shape and in some manner results in releasing the flavoring compounds, which may be bound or encapsulated by the soy proteins when they are in a neutral or acid solution. The flavoring compounds, which have relatively low molecular weight compared to the soy proteins are able to pass through the pores of the ultrafiltration membrane, while substantially all of the solubilized soy proteins are too large and are retained. Importantly, the pH should be maintained within the just described range (i.e., about 9 to about 12) during the ultrafiltration/diafiltration process to allow as much of the flavoring compounds as possible to be removed.

The third step could be carried out in a batch manner similar to the laboratory experiments reported below in Examples 1-5 in which the flavor compounds and water passed through the membrane and were removed by flowing water. However, in commercial applications of the process of the invention, the pH-adjusted aqueous mixture would be circulated continuously adjacent to an ultrafiltration membrane. Since water, the caustic and the flavoring compounds pass through the membrane as permeate and are discarded, additional water will be added to maintain the desired concentration of soy materials, which will tend to lower the pH of the aqueous mixture. This water may be augmented by dewatering the permeate and recycling the recovered water to the feed stream. A pH-modifying material (e.g., base) can be added as necessary to control the pH in the desired range (i.e., about 9 to about 12) directly to the ultrafiltration solution, to any recycled aqueous material, or to makeup water as desired.

After removal of the flavoring compounds (i.e., after completion of the ultrafiltration process), further neutralization of the filtered solution may be accomplished by withdrawing product and adding an acid as required to reach the desired pH. After pH adjustment, the aqueous mixture of soy proteins and other materials may be used directly in food products, or it may be concentrated or dried as required for the intended use.

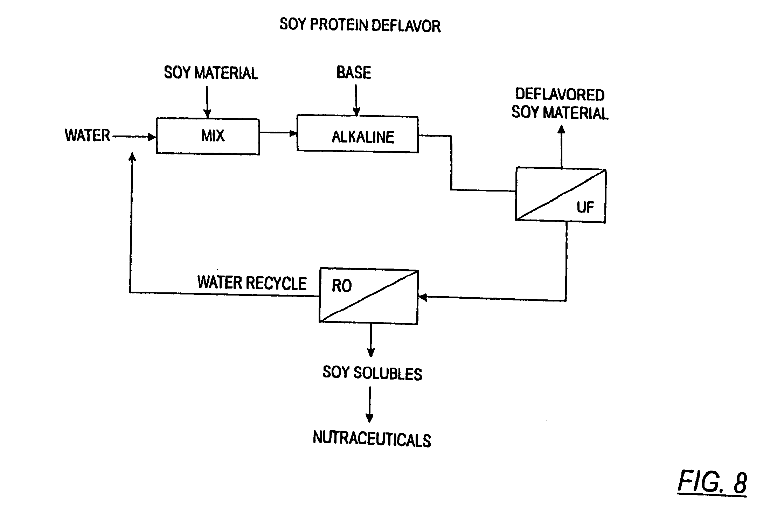

A process for deflavoring soy materials by ultrafiltration may be operated in various ways. The pH during the ultrafiltration/diafiltration process is maintained in the range of about 9 to about 12, and preferably in the range of about 9.5 to about 10.5. Two methods will be described, continuous processing and batch (including semi-continuous operation) processing. It is expected that commercial processes will adopt batch or semi-continuous operation, which should be better suited to production of food-grade soy products. A continuous process is generally shown in FIG. 8. In either a continuous or batch process an aqueous mixture of soy materials is pH adjusted to solubilize soy proteins and release flavor compounds and then passed adjacent an ultrafiltration membrane which permits the lower molecular weight flavoring materials to pass through its pores along with water (the permeate), leaving the higher molecular weight soy materials (the retentate) to be recirculated. A portion of the retentate will be withdrawn as deflavored product, from which the soy materials can be recovered as needed for the ultimate end use. Water will be added to replace that lost in the permeate and to provide a constant concentration of soy materials in the feed stream supplied to the ultrafiltration membrane. Although not essential to the process, the process of FIG. 8 includes additional processing of the permeate to recover a portion of the water using a reverse osmosis membrane for recycling to join the retentate and fresh soy materials. The advantage of such a step is in reducing the amount of fresh water which must be added to the process and removed in concentrating the permeate. Of course, the pH of the soy-derived materials can be kept within the desired range by appropriate addition of a base to the recycled or fresh water added to the process or by direct addition of base as desired.

In a batch process, such as those described in Examples 6-8 below, a batch of soy material is placed in a vessel, pH adjusted, and fed to an ultrafiltration membrane. The permeate is separated and the retentate is returned to the vessel. As the process proceeds, the soy material is depleted in the lower molecular weight flavoring compounds and water and becomes more concentrated in the desirable soy proteins. Periodically, water is added to the retentate to dilute it and provide a carrier for the flavoring compounds which are passed through the membrane. In a semi-continuous process the water is added continuously at the rate it is being removed in the permeate. The process is continued until all of the flavoring compounds have been removed and the retentate is sufficiently deflavored to become the product, which can be further processed as required for the ultimate end use. A batch or semi-continuous process may also include the concentration of the permeate, with recycle of separated water in a similar manner as that shown in FIG. 8. The pH during the ultrafiltration/diafiltration process is maintained in the range of about 9 to about 12, and preferably in the range of about 9.5 to about 10.5.

The ultrafiltration membrane will be operated with a pressure differential across the membrane which assists migration of the flavoring compounds, water and other materials which are capable of passing through the pores of the membrane, while not exceeding the physical strength of the membrane. Typical average pressure for such membranes are about 50 psi (345 kPa). The trans-membrane pressure (in versus out) will be about 15 psi (103 kPa). Of course, these pressures could be varied based on the membrane's specifications and other operational concerns. The flow rate of the feed stream will provide sufficient residence time for significant permeate removal, but also will be high enough to provide turbulence so that the access of the feed stream to the membrane pores will not be hindered by solid deposits on the membrane walls. One skilled in the art will understand that suitable operating parameters will be determined by experience with the materials being separated.

In a preferred embodiment, the present invention provides a method for preparing deflavored soy protein material, said method comprising: (a) preparing an aqueous composition of a soy material containing soluble soy proteins, flavoring compounds, and insoluble materials; (b) solubilizing the soy proteins by adjusting the aqueous composition of (a) to a pH in the range of about 9 to about 12 and releasing the flavoring compounds; (c) removing the insoluble materials from the pH-adjusted aqueous composition of (b) to obtain a treated aqueous composition; (d) passing the treated aqueous composition of (c) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and (e) recovering the solubilized soy proteins retained by the ultrafiltration membrane to obtain the deflavored soy protein material. This preferred embodiment is described in more detail in copending U.S. Patent Application Serial Number 10/655,259, filed September 4, 2003 and entitled "Method of Deflavoring Soy-derived Materials," which is hereby incorporated by reference.

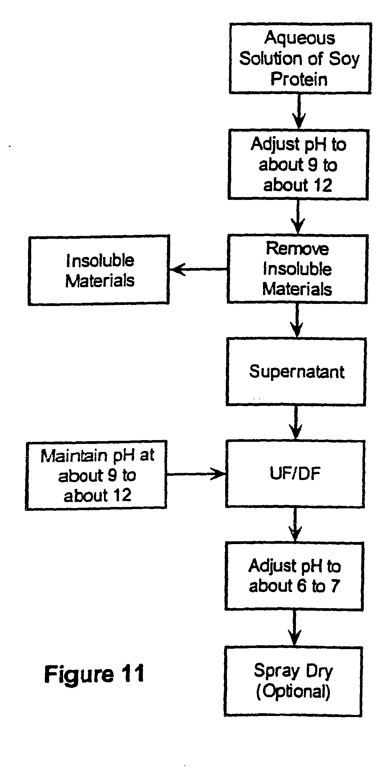

This preferred embodiment is illustrated in FIG. 11 wherein the pH of an aqueous solution of soy protein is adjusted to about 9 to about 12. The pH-adjusted aqueous solution is then treated to remove insoluble materials. Any conventional technique (e.g., filtration, decantation, centrifugation, and the like) can be used. Preferably, the insoluble material is removed by centrifugation. Commercially available continuous centrifugation units are ideally suited for this separation in a semi-batch or continuous type operation. In an especially preferred embodiment, the pH-adjusted aqueous solution is subjected to the removal technique (e.g., centrifugation) at least twice in order to facilitate a more complete removal of insoluble materials. The treated supernatant is then subjected to ultrafiltration, preferably combined with diafiltration, in order to remove the flavor components normally associated with soybeans. During ultrafiltration, the pH of the soy-derived material should be maintained in the range of about 9 to about 12. After ultrafiltration, the pH is adjusted to a neutral pH using an edible acid (e.g., citric acid). The deflavored soy protein solution may be used directly or it may be converted to a solid form if desired. Any conventional technique for removing water can be used. Generally, spray or freeze drying techniques are preferred.

**Deflavored Soy Products.** The deflavored soy protein materials prepared by the present methods are ideally suited for use in dairy and non-dairy beverages, smoothies, health drinks, cheese products, fermented dairy-type products such as dairy and non-dairy yogurts, meat and meat analog products, cereals, baked products, snacks, and the like. The present invention provides soy-containing cheese products prepared using deflavored soy protein. Soy-containing cheese products containing deflavored soy protein isolate and/or deflavored soy protein concentrate are especially preferred.

Generally the soy-containing cheeses of this invention are prepared by blending the desired deflavored soy protein material with a cheese base composition. Soy-containing cheeses products which contain, on a dry basis, about 7 to about 40 percent deflavored soy protein, and more preferably about 9 to about 23 percent deflavored soy protein, can be prepared using the method of this invention without the flavor and/or odor defects normally associated with soy beans. Thus, using the present invention, soy-containing cheese products can be prepared with provided up to about 8 g of soy protein, and preferably about 2.5 to about 6.25 g, per single serving size (generally about 30 g is considered a single serving). This invention, therefore, allows the incorporation of significant levels of soy protein in cheese products without the adverse organoleptic defects normally associated with soy beans.

Unless noted otherwise, all percentages are by weight. All references cited herein are incorporated by reference.

### EXAMPLE 1.

Soy protein isolate (Protein Technology International (PTI); St. Louis, MO) was hydrated in tap water to provide a concentration of 10 percent. The aqueous composition was mixed with a magnetic stirrer until all of the soy protein isolate was completely dispersed. The pH of the mixture was adjusted to 11.0 using sodium hydroxide. Then, the pH-adjusted composition was placed in a dialysis tube (Spectrum, Inc.) having a 3500 molecular weight pore size and tap water was passed over the outside of the tube continuously for about 4 hours; the pH remained greater than about 9 during dialysis. The composition remaining in the dialysis tube was poured into a glass beaker, neutralized, and evaluated for aroma and taste. A comparison was made with the dialyzed composition and a sample treated in a similar manner, but which had a pH of 6.7 and a second sample which had been neither dialyzed nor pH-adjusted. Blind evaluation by several individuals showed that only the pH-adjusted and dialyzed sample had significantly improved taste and aroma.

### EXAMPLE 2.

A similar test was carried out using soy milk (Devansoy Farms, Carrol, lowa) made into a 10 percent aqueous composition and then pH-adjusted and dialyzed overnight as in Example 1. After the treatment, the pH of the sample was 8.8 and the aroma and taste were significantly improved.

### EXAMPLE 3.

Example 2 was repeated with soy milk freshly prepared by soaking and blanching the beans and then grinding and separating the soy milk from the meal. After pH adjustment and dialysis as previously described, it was found that the taste and aroma of the soy milk was significantly improved.

### EXAMPLE 4.

Example 3 was repeated using a dialysis tube having a pore size of 6000 molecular weight and similar results were obtained.

### EXAMPLE 5.

Example 2 was repeated with dry soy flour (Cargill, Inc.). The soy flour was hydrated to a 10 percent composition and then pH-adjusted as previously described. After dialyzing overnight the pH of the remaining composition in the dialysis tube had a pH of 8.7 and had significantly improved aroma and taste.

### EXAMPLE 6.

In a large mixing tank 33 pounds (15 kg) of Sun Rich soy milk containing 15 percent solids was diluted with 66 pounds (30 kg) of water to produce a slurry of 100 pounds (45 kg) containing 5 percent soy solids. A 1N NaOH solution was added slowly to solubilize the soy proteins until a pH of 11 was reached.

A diafiltration of the alkalized soy solution was carried out by pumping the solution from the mixing tank through two parallel hollow fiber membranes (A/G Technology Corporation) having a molecular weight cutoff of 10,000 Daltons and a surface area of 3.3 m². The trans-membrane pressure across the membranes was 20-50 psi (138-345 kPa). The material passed through the membrane (permeate) was collected. The remaining material (retentate) was continuously recycled to the mixing tank. When 50 pounds (22.7 kg) of permeate had been collected, the mixing tank contained 50 pounds (22.7 kg) of soy solution. An additional 50 pounds (22.7 kg) of water was added to the mixing tank. The pH was maintained at about 9 to about 12 during ultrafiltration/diafiltration. This washing with addition of water to the mixing tank was repeated five times, after which the solution in the mixing tank was concentrated to about 10 percent solids as water was removed in the permeate and then the retained soy solution was neutralized with 2 percent citric acid to a pH of 7.0.

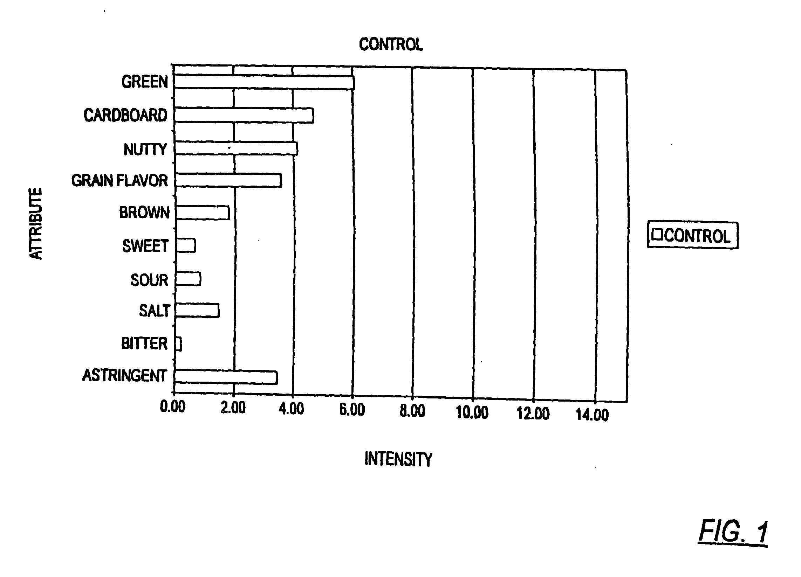

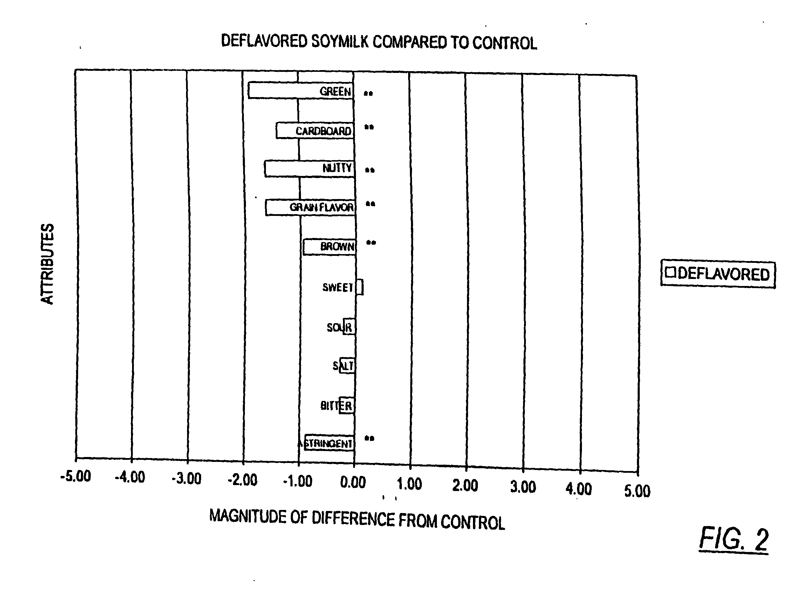

The neutralized solution was evaluated by a trained sensory panel and compared with a control sample of Sun Rich soy milk which had been diluted to 10 percent with water, but not otherwise treated. The soy solutions were presented in a blind and randomized order. The results are shown in the graphs of FIGS. 1 and 2.

FIG. 1 shows the mean intensity score for 10 attributes. The panel judged certain attributes to be more significant than others. When compared to the soy solution which had been treated as described above, the outstanding attributes had all been reduced with a 95 percent confidence level. Those attributes which had less prominent in the control (i.e., Brown, Sweet, Sour, Salt and Bitter) were reduced, except for Sweet which increased in value, but the panel mean values did not reach a 95 percent confidence level.

It is clear from the results that the soy solution had been rendered more neutral in flavor by removal of flavor components.

### EXAMPLE 7.

Ten pounds (4.55 kg) of a soy protein concentrate (Central Soya) was mixed with 190 pounds (86.4 kg) of water in a tank with high agitation for 15-30 minutes to hydrate the soy protein. Then 1 N NaOH was added to solubilize the soy protein to a pH of 11. In a similar manner to that described in Example 6 the soy slurry was pumped through a spiral membrane (Gea Niro Inc.) having a molecular weight cutoff of 10,000 Daltons. The trans-membrane pressure across the membrane was maintained below 50 psi (344.7 kPa). The pressure drop through the membrane was maintained below 15 psi (103.4 kPa) and the pH was maintained at about 9 to about 12. As in Example 6, five additions of water were made when the permeate withdrawn from the membrane reached one-half of the original volume in the mixing tank. After five water additions the pH of the washed soy solution was adjusted to 7.5 by adding 0.5 N HCI and then freeze dried for sensory evaluation.

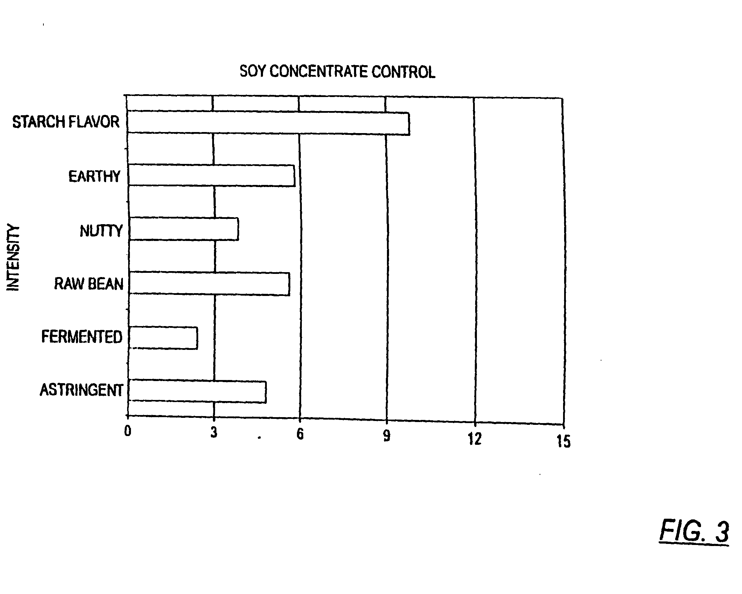

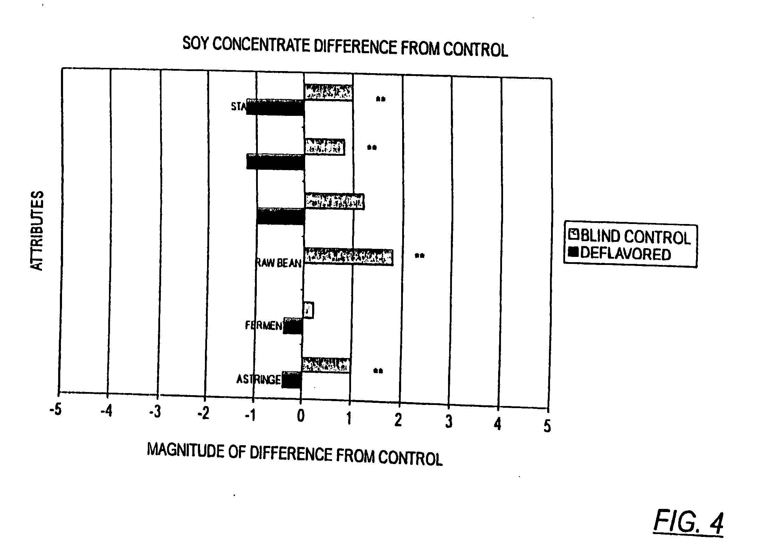

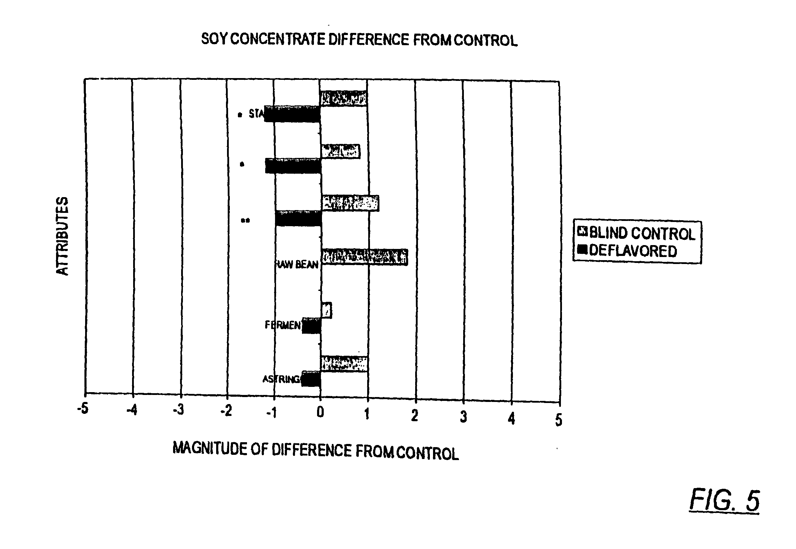

The deflavored soy protein concentrate was evaluated for six attributes by a trained sensory panel. The mean values for each attribute for the control sample (untreated) are given in FIG. 3. In this example a difference was found between the deflavored soy concentrate and the control, but none were at the 95 percent confidence level, although all the values were lower. This is shown in FIG. 4. Also included are the results of a blind control used, which was rated after the deflavored sample. In this case, the blind control was found to have stronger flavor attributes than the original control of FIG. 3. It is believed that this occurred because the blind control in this example was tested after the deflavored sample and appeared to the panel to have a relatively stronger flavor in the second evaluation of the control. However, when compared with the blind control sample, the deflavored sample showed significant differences for three of the flavor attributes at the 90 to 95 percent confidence level, as shown in FIG. 5.

### EXAMPLE 8.

The membrane used to deflavor soy proteins should have a molecular weight cutoff of 10,000 Daltons, shown to be effective in Examples 6 and 7. A higher molecular weight cutoff membrane can be used if desired, but at a molecular weight cutoff of 50,000 Daltons some valuable proteins have been lost in the permeate, as is shown in this example.

Five pounds (2.27 kg) is a dry soy isolate (Supro-670 PTI) was mixed with 95 pounds (43.2 kg) of water as in Example 7 to provide a slurry containing 5 percent soy solids. 1 N NaOH was added to raise the pH to 11 and solubilize the soy proteins. Diafiltration using five additions of water was carried out in a manner similar to that described in Examples 6 and 7 and using the hollow fiber membranes of Example 6. The pH was maintained at about 9 to about 12 during ultrafiltration/diafiltration. Samples of the permeate were taken at five minute intervals, neutralized and frozen for protein analysis.

The permeate samples were analyzed for total protein content by electrophoresis, with the results shown in the following table:

**TABLE A:**

| Time (minutes) | Molecular Weight Cutoff | |
|---|---|---|
| | 10,000 Daltons | 50,000 Daltons |
| | Protein (%) | Protein (%) |
| 0 | 0 | 0.4 |
| 5 | 0.6 | 1 |
| 10 | 0.8 | 0.6 |
| 15 | 0.4 | 0.6 |
| 20 | 0.4 | 0.6 |
| 25 | 0 | 0.4 |
| 30 | 0 | 0.4 |
| 35 | 0.5 | 0.4 |
| 40 | 0 | 0.3 |
| 45 | 0 | N/A |

It can be seen that the membrane having a 10,000 Dalton cutoff retains more protein than the membrane having a 50,000 Dalton cutoff. The value at 35 minutes for the 10,000 Dalton membrane is believed to be erroneous.

### EXAMPLE 9.

Samples of soy materials deflavored using the methods of Examples 6-8 were analyzed by protein gel electrophoresis. The results indicate that the molecular weight distribution of the retained soy materials was substantially the same as that of the original soy material. The results are shown in the following table:

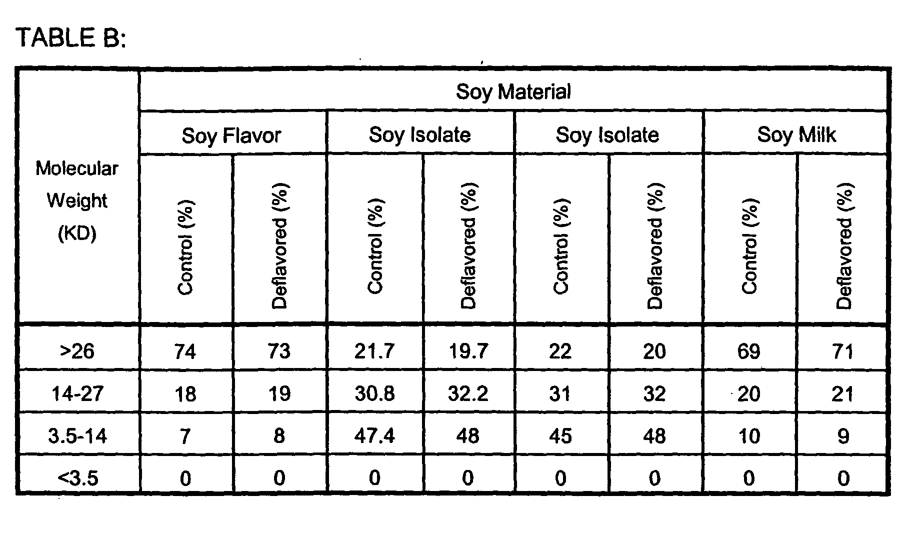

### EXAMPLE 10.

Analysis was carried out for the chemical constituents associated with the flavor attributes determined by the sensory panels described in previous examples. Two samples of soy protein isolates were tested. One sample had been deflavored by the method described in Example 7; the second sample had not been deflavored.

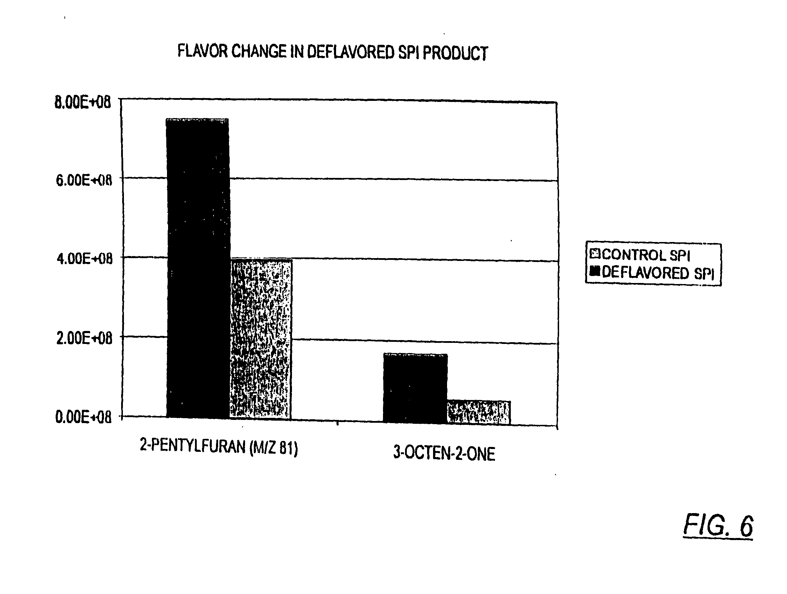

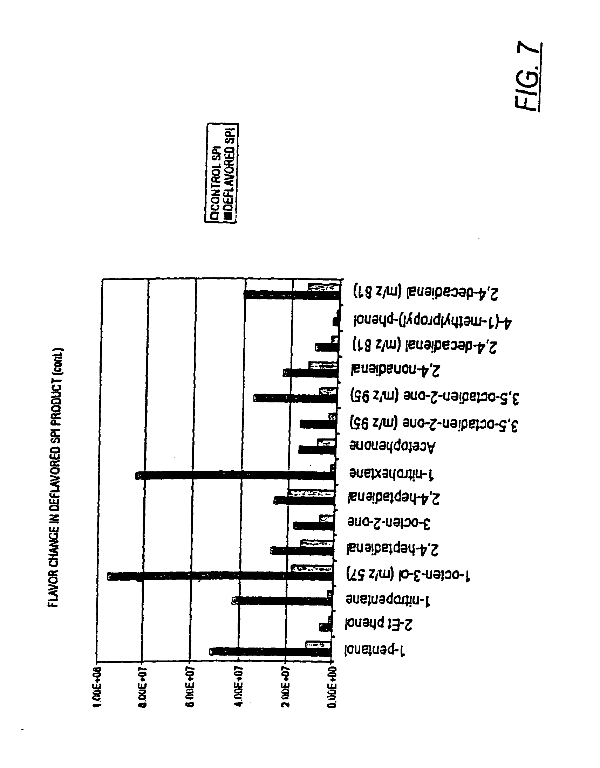

In a first test, one gram of a control sample was diluted with 15 g of water, 2 µl of 300 ppm of 4-heptanone was added as an internal standard, and the mixture was purged with 100 ml/min of helium at 60°C for 30 min. A deflavored sample was prepared similarly as the control sample, except that the pH was raised to 10 by adding a NaOH solution in order to solubilize the proteins. The volatile compounds were analyzed by GC/MS (HP GC5890/MSD5972). The results for various compounds are shown in FIGS. 6 and 7. The deflavored soy sample contained smaller amounts of the flavoring compounds.

In a second test, three gram samples were diluted with 30 g of water and 2 µl of 300 ppm 4-heptanone was added as an internal standard. The resulting mixtures were purged with 100 ml/min of helium at 60°C for 20 min to remove the volatile compounds. The volatiles were analyzed by gas chromatography and the odor of the compounds judged by human criteria. The odors associated with specific chemical compounds are reported in the following table:

**TABLE C:**

| Odor Characteristics of Decreased Compounds After Deflavoring Process. | | |
|---|---|---|
| Compound | Odor in SPI Control | Odor in Deflavored SPI |
| 1-pentanol | faint, green | weakly fatty |
| 2-ethylphenol | spicy, herbaceous | ND |
| 1-nitropentane | ND | ND |
| 1-octen-3-ol | mushroom, earthy, very strong | mushroom, earthy, strong |
| *cis*-2,4-heptadienal | ND | ND |
| *cis*-3-octen-2-one | ND | ND |
| *trans*-2,4-heptadienal | ND | weak green |
| acetophenone | burnt, floral, caramel | burnt, caramel |
| *cis, trans*-3,5-octadien-2-one | ND | ND |
| *trans, trans*-3,5-octadien-2-one | green, floral, fatty | fatty, green |
| 2,4-nonadienal | fatty, oily, deep-fried | fatty, oily, deep-fried |
| *cis*-2,4-decadienal | fatty, oily, musty | green onion, painty |
| 4-(1-methylpropyl)- phenol | bubblegum, fruity | ND |
| *trans*-2,4-decadienal | fatty, oily, waxy | fatty, oily, green |
| 2-pentylfuran | green, floral, etherous | green, floral, etherous |
| *trans*-3-octen-2-one | floral, green, earthy | floral |

### EXAMPLE 11.

This example illustrates the preparation of process cheese using various deflavored soy protein compositions (i.e., a deflavored soy protein isolate (SPI) and a deflavored soy protein concentrate (SPC)). A control sample was also prepared using untreated soy protein isolate. The deflavored soy protein isolate was prepared from soy protein isolate (PTI 710 containing about 90 percent protein) obtained from Solae Co. (St. Louis, MO) using a procedure similar to Example 8 above. The deflavored soy protein concentrate was prepared from defatted soy flour (53 percent protein) obtained from Archer Daniel Midland (ADM; Decator, IL) using a procedure similar to Example 7 above. The following formulations were prepared:

| **Ingredient** | **Amount (%)** | | |
|---|---|---|---|
| | **Control** | **Inventive #1** | **Inventive #2** |
| **Process Cheese** | 50.0 | 50.0 | 50.0 |
| **Untreated SPI** | 15.5 | 0 | 0 |
| **Deflavored SPI** | 0 | 15.5 | 0 |
| **Deflavored SPC** | 0 | 0 | 15.5 |
| **Cream** | 10.0 | 10.0 | 10.0 |
| **Water** | 23.8 | 23.8 | 23.8 |
| **Disodium phosphate** | 0.7 | 0.7 | 0.7 |
| **Colorant** | 0.01 | 0.01 | 0.01 |

To prepare each sample, the appropriate control or deflavored soy protein material was hydrated in water containing the emulsifying salt (i.e., disodium phosphate). The resulting mixture was then mixed with cream at room temperature for about 5 minutes. The process cheese was melted in a heat-jacketed cooker, after which the hydrated soy protein, cream, and water mixture was added. The resulting composition was then heated to about 176°F over a period of about 5 minutes to obtain the desired cheese products. The cheese products were cooled and then stored overnight under refrigeration conditions before evaluation.

The following results were obtained upon evaluation. Firmness was measured using a pentrometer by Precision Scientific (41.9-g cone with a 5 second time period). The lower the pentrometer value, the firmer the product.

| **Sample** | **Protein (%)** | **Fat (%)** | **Moisture (%)** | **Firmness (mm)** |
|---|---|---|---|---|
| **Control** | 22.1 | 17.6 | 51.6 | 5.0 |
| **Inventive 1** | 21.4 | 17.6 | 50.2 | 2.7 |
| **Inventive 2** | 18.2 | 17.6 | 51.4 | 4.3 |

The process cheese made with deflavored SPI (i.e., inventive sample 1) was significantly firmer than either sample 2 prepared with deflavored SPC or the control sample. An informal taste panel found that the process cheeses made with the deflavored SPI and deflavored SPC did not have a beany flavor whereas the control sample did have a beany flavor that most consumers would have found objectionable. than that made the non-deflavored SPI. No beany flavor was noticed in the deflavored soy cheese. The two inventive samples had essentially the same flavor and appearance; the sample prepared with deflavored SPI was, however, significantly firmer. Based on firmness (and cost of the starting soy protein material), the process cheese prepared with deflavored SPC is preferred.

The soy-containing process cheese had good organoleptic properties. Although its cheese intensity was not as strong as the regular non-soy containing process cheese slices, its overall flavor and other organoleptic properties were significantly superior commercially available soy cheese slices.

### Example 12.

This example illustrates the preparation of an imitation mozzarella cheese product using deflavored soy protein prepared from soy protein concentrate (63 percent protein) obtained from ADM using a procedure similar to Example 7 above. The following formulation was used:

| **Ingredient** | **Amount (%)** |
|---|---|
| Milk Protein Concentrate (Nutrilac CH7813) | 15.1 |
| Cream | 50.0 |
| Water | 9.3 |
| Salt | 1.7 |
| Carboxymethylcellulose gum | 0.2 |
| Trisodium phosphate | 0.9 |
| Deflavored Soy Protein Concentrate | 10.6 |
| Sorbic Acid | 0.4 |
| Calcium Chloride Solution (saturated) | 0.25 |
| Lactic Acid | 1.2 |
| Sodium Citrate | 0.2 |
| Water | 10.0 |

A dough-like material was formed by blending all the ingredients above the double line in the table above in a blender (medium speed) at 72°F for 5 minutes. The dough was blended with the remaining ingredients in a cheese cooker; the temperature was increased to about 165°F over about a 5 minute period and held at that temperature for about a minute. The resulting imitation mozzarella cheese product was stored in tubs overnight at 40°F before evaluation.

The imitation mozzarella cheese product contained about 21 percent protein, about 20 percent fat, about 2.8 percent lactose, and about 49.1 percent moisture. The imitation mozzarella cheese product was bland and could be shredded using conventional cheese shredding equipment. With the addition of appropriate cheese flavors, the imitation mozzarella cheese product should provide an excellent cheese product containing significant amounts of soy protein.

### Example 13.

This example illustrates the preparation of natural mozzarella cheese using deflavored soy protein prepared from soy protein flour (50 percent protein) obtained from ADM using a procedure similar to Example 8 above. The following formulations were used:

| **Ingredient** | **Amount (%)** | |
|---|---|---|
| | **Control** | **Inventive** |
| Natural Cheese (Mozzarella) | 60.0 | 58.0 |
| Milk Protein Concentrate (Nutrilac CH7813) | 16.8 | 2.5 |
| Water | 18.8 | 21.6 |
| Salt | 1.5 | 1.4 |
| Carboxymethylcellulose gum | 0.2 | 0.2 |
| Trisodium phosphate | 0.7 | 0.7 |
| Deflavored Soy Protein Concentrate | 0 | 13.7 |
| Sorbic Acid | 0.3 | 0.3 |
| Calcium Chloride Solution (saturated) | 0.3 | 0.3 |
| Lactic Acid | 1.2 | 1.2 |
| Sodium Citrate | 0.2 | 0.2 |

A dough was prepared in a manner similar to the procedure of Example 12 by blending all ingredients above the double line in the above table in a blender. The dough was transferred to a cheese cooker wherein the calcium chloride, lactic acid, and sodium citrate were added. Approximately 4 percent additional water was added was also added to assist in mixing the composition. The composition was heated to about 165°F over a 5 minute period and held at that temperature for about a minute.

The resulting natural cheese was stored in tubs overnight at 40°F before evaluation. The resulting natural mozzarella cheese had good cheese flavor and was suitable for shredding.

### Example 14.

This example illustrates the use of various deflavored soy protein materials in preparing process cheese slices. Various soy materials (i.e., XT 40 from Solae Co.; ProFam 781 from ADM; and soy milk) were deflavored using essentially the same procedure as described in Example 8. The following formulations, designed to provide about 2.5 g soy protein per single slice, were prepared in five pound batches:

| Ingredient | XT 40 (g) | | ProFam 781 (g) | | Soy Milk (g) | |
|---|---|---|---|---|---|---|
| | Control | Deflavored | Control | Deflavored | Control | Deflavored |
| Whey Protein Concentrate | 38.9 | 38.9 | 38.9 | 38.9 | 38.9 | 38.9 |
| Nonfat Dry Milk | 7.5 | 7.5 | 7.5 | 7.5 | 7.5 | 7.5 |
| Spray Dried Sweet Whey | 67.6 | 67.6 | 67.6 | 67.6 | 67.6 | 67.6 |
| Soy Material | 235.9 | 235.9 | 235.9 | 235.9 | 500.0 | 500.0 |
| Water | 504.0 | 504.0 | 504.0 | 504.0 | 240.0 | 240.0 |
| Natural Cheese | 778.5 | 778.5 | 778.5 | 778.5 | 778.5 | 778.5 |
| Milk Protein Concentrate | 19.0 | 19.0 | 19.0 | 19.0 | 19.0 | 19.0 |
| Fatted Milk Protein | 96.8 | 96.8 | 96.8 | 96.8 | 96.8 | 96.8 |
| Anhydrous Milk Fat | 27.8 | 27.8 | 27.8 | 27.8 | 27.8 | 27.8 |
| Process Cheese Trim | 85.0 | 85.0 | 85.0 | 85.0 | 85.0 | 85.0 |
| Vitamins | 0.02 | 0.02 | 0.02 | 0.02 | 0.02 | 0.02 |
| Colorants | 0.6 | 0.6 | 0.6 | 0.3 | 0.6 | 0.6 |
| Tricalcium Phosphate | 35.2 | 35.2 | 35.2 | 35.2 | 35.2 | 35.2 |
| Sodium Citrate | 30.1 | 30.1 | 30.1 | 30.1 | 30.1 | 30.1 |
| Disodium Phosphate | 14.5 | 14.5 | 14.5 | 14.5 | 14.5 | 14.5 |
| Sodium Chloride | 14.0 | 14.0 | 14.0 | 14.0 | 14.0 | 14.0 |
| Monosodium Phosphate | 0.5 | 0.5 | 0.5 | 0.5 | 0.5 | 0.5 |
| Sorbic Acid | 2.8 | 2.8 | 2.8 | 2.8 | 2.8 | 2.8 |
| Condensate | 309.0 | 309.0 | 309.0 | 309.0 | 309.0 | 309.0 |

In each case, the soy material was dispersed in water with mixing for about 3 to 5 minutes. The protein/dairy ingredients (i.e., whey protein concentrate, nonfat dry milk, spray dried sweet whey) were then added with additional mixing. Cheese blend ingredients (i.e., natural cheese, milk protein concentrate, fatted milk protein, process cheese trim) were then added with additional mixing. The vitamins and colorants were dissolved in the anhydrous milk fat and then added. The various salts were added and blending continued for about 3 to about 5 minutes.

The resulting blends were then cooked in a cheese cooker for about 5 minutes at about 176°F using steam injection (wherein condensate is added to the blend). After cooking, the cheese was hot packed in a hot-pack cheese slice machine. Each of the samples prepared contained about 23 percent protein, about 15 percent fat, and about 50 to about 56 percent moisture. The cheese slices prepared with deflavored soy materials had a superior taste and texture as compared to the control samples.

Moreover the Solae XT 40 and the ProFam 781 soy-containing starting materials generally appeared to provide superior process cheese products, especially with regard to texture, than other soy containing materials examined thus far. Although not wishing to limited by theory, we currently believe that the superior performance of these materials may be the result, at least in part, of moderate hydrolysis of these materials as received. The degree of hydrolysis of these materials is estimated at about 3 to about 25 percent (with a preferred range estimated to be about 5 to about 15 percent) based on analysis of the molecular weight distribution of the soy-containing starting material. A more extensively hydrolyzed material (data not shown), using similar cheese-making procedures as described in this example, gave slices that were too soft. Soy-containing starting materials that were apparently not hydrolyzed (data not shown) gave slices that, although acceptable, were firmer than generally desired. Further efforts are underway to investigate the role or effect, if any, of hydrolysis of the soy material.

## Claims

1. A soy-containing cheese product comprising a deflavored soy protein material, wherein the deflavored soy protein material is prepared by a method comprising:
(a) obtaining a soy protein composition containing soluble soy proteins, flavoring compounds, and insoluble materials;
(b) solubilizing the soy proteins by adjusting the soy protein composition of (a) to a pH in the range of about 9 to about 12 and releasing the flavoring compounds;
(c) passing the pH-adjusted soy protein composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy protein composition and retaining substantially all of the solubilized soy proteins; and
(d) recovering the solubilized soy proteins retained by the ultrafiltration membrane, wherein the recovered solubilized soy proteins is the deflavored soy protein material.

2. The soy-containing cheese product of Claim 1, wherein the soy-containing cheese product is a process or natural cheese containing about 2.5 to about 6.5 g soy protein per single serving size of about 30 g.

3. The soy-containing cheese product of Claim 1 or 2, wherein the aqueous composition of (a) has a concentration of soy proteins in the range of about 1 to about 20 percent.

4. The soy-containing cheese product of any one of Claims 1 to 3, wherein the ultrafiltration membrane has a cutoff in the range of about 1,000 to about 50,000 Daltons.

5. The soy-containing cheese product of any one of Claims 1 to 4, wherein the ultrafiltration membrane has a cutoff in the range of about 10,000 to about 30,000 Daltons.

6. The soy-containing cheese product of any one of Claims 1 to 5, wherein the ultrafiltration is carried out at a temperature in the range of about 10 to about 60°C and a suitable pressure.

7. The soy-containing cheese product of any one of Claims 1 to 6, wherein the ultrafiltration membrane is a polymer, ceramic, or inorganic membrane.

8. A method of preparing a soy-containing cheese product, said method comprising mixing a deflavored soy protein material and a cheese base composition to form the soy-containing cheese product;
wherein the deflavored soy protein material is prepared by a method comprising:
(a) obtaining a soy protein composition containing soluble soy proteins, flavoring compounds, and insoluble materials;
(b) solubilizing the soy proteins by adjusting the soy protein composition of (a) to a pH in the range of about 9 to about 12 and releasing the flavoring compounds;
(c) passing the pH-adjusted soy protein composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy protein composition and retaining substantially all of the solubilized soy proteins; and
(d) recovering the solubilized soy proteins retained by the ultrafiltration membrane, wherein the recovered solubilized soy proteins is the deflavored soy protein material.

9. The method of Claim 8, wherein the soy-containing cheese product is a process or natural cheese containing about 2.5 to about 6.5 g soy protein per single serving size of about 30 g.

10. The method of Claim 8 or 9, wherein the ultrafiltration membrane has a cutoff in the range of about 1,000 to about 50,000 Daltons.

11. The method of any one of Claims 8 to 10, wherein the ultrafiltration is carried out at a temperature in the range of about 10 to about 60°C and a suitable pressure and wherein the ultrafiltration membrane is a polymer, ceramic, or inorganic membrane.
